# FASCICULE DE BREVET EUROPEEN

(11) **EP 2 673 117 B1**
(45) Date de publication et mention de la délivrance du brevet: **08.04.2015**
(21) Numéro de dépôt: 12700863.9
(22) Date de dépôt: 25.01.2012
(51) Int. Cl.: B25H 1/20, B25H 1/14

(54) **PLATEAU DE POSE A REBORDS AMELIORES, MOBILIER COMPRENANT UN TEL PLATEAU, ET SERVANTE D'ATELIER CORRESPONDANTE**
SCHALE MIT VERBESSERTEN RÄNDERN, MÖBEL MIT SOLCH EINER SCHALE UND ENTSPRECHENDER WERKZEUGWAGEN
TRAY HAVING IMPROVED RIMS, FURNITURE INCLUDING ONE SUCH TRAY, AND CORRESPONDING TOOL TROLLEY

(30) Priorité: 08.02.2011 FR 1100385
(43) Date de publication de la demande: 18.12.2013
(73) Titulaire: Stanley Works (Europe) GmbH, 8600 Dübendorf (CH)
(72) Inventeur: DUFOURE, Didier, F-80210 Feuquieres en Vimeu (FR); OZENNE, Benoit, F-80570 Dargnies (FR); THIROUIN, Stephane, F-69006 Lyon (FR); TILLET, Benoit, F-94370 Sucy en Brie (FR)
(74) Mandataire: Kavanagh, Benjamin
(86) Numéro de dépôt international: PCT/EP2012/051162
(87) Numéro de publication internationale: WO 2012/107292

(56) Documents cités:
- GB-A- 230 138
- US-A1- 2002 079 069

## Description

La présente invention concerne un plateau d'élément de mobilier comprenant une surface supérieure destinée à la pose d'un objet, la surface formant un plan général ; au moins un rebord mobile entre une position de repos dans laquelle le ou chaque rebord est disposé en saillie par rapport au plan général de la surface supérieure et une position de travail dans laquelle le ou chaque rebord est en alignement par rapport au plan général de la surface supérieure. Un tel dispositif est connu à partir de US 2002 079069A1.

Il est connu, dans le domaine du mobilier, de poser des objets ou charges sur des plans de travail. En particulier, certains équipements sont dotés de plateaux pourvus de rebords métalliques repliables manuellement. Ce type d'agencement permet deux types de configuration de charge du plateau pour la pose d'un objet. Une première configuration consiste à limiter complètement le périmètre du plateau par des rebords en saillie par rapport au plan de pose. Une deuxième configuration consiste à libérer partiellement ou totalement le périmètre du plateau de cette bordure. Toutefois, l'opération manuelle ne permet pas un gain de temps et l'opérateur peut oublier de reconfigurer son plan de pose. De plus, cet agencement ne permet pas un coût de fabrication économique de l'ensemble.

L'invention a pour but d'améliorer la conception d'un plateau de pose tout en réduisant le coût de fabrication.

A cet effet, l'invention a pour objet un plateau du type cité ci-dessus caractérisé en ce que le ou chaque rebord s'escamote automatiquement sous l'action d'une charge sollicitant le ou chaque rebord depuis sa position de repos vers sa position de travail, la charge étant posée sur la surface supérieure du plateau à l'aplomb du ou de chaque rebord.

Ainsi, l'invention contraint certains objets dans un espace limité, tout en garantissant un plan dégagé pour la pose d'autres objets.

Selon d'autres caractéristiques :
- le ou chaque rebord est mobile suivant une direction sensiblement perpendiculaire au plan général de la surface supérieure ;
- le ou chaque rebord est sollicité par au moins un organe de rappel agissant à l'encontre de l'action de la charge qui tend à déplacer le ou chaque rebord depuis sa position de repos vers sa position de travail, le ou chaque rebord reprenant sa position de repos en saillie du plan général lorsque l'action de la charge est annulée ;
- le ou chaque rebord comprend une forme en L comportant une aile longue et une aile courte disposées respectivement sensiblement verticalement et sensiblement horizontalement ;
- un guide reçoit l'aile longue du L du ou de chaque rebord, et en ce qu'un ressort de compression disposé entre une butée fixe et l'aile courte du L tend à déplacer le ou chaque rebord vers la position de repos;
- le plateau présente une forme sensiblement rectangulaire, et comprend deux rebords escamotables disposés parallèlement entre eux suivant la direction du plateau de petite dimension;
- le plateau comprend un plan, de préférence en bois, recouvert d'une plaque métallique, de préférence profilée, et en ce qu'il est disposé, en outre, entre deux embouts fendus, chacun des deux rebords étant disposé dans la fente de l'embout correspondant ;
- l'un au moins des embouts comprend au moins un évidement destiné au rangement d'objet ;

La présente invention concerne également un mobilier comprenant une structure porteuse et au moins un plateau de pose, caractérisé en ce que le ou chaque plateau est tel que décrit précédemment.

La présente invention concerne aussi une servante d'atelier mobile comprenant un caisson équipé d'au moins un tiroir et doté de moyens de déplacement, en particulier des roulettes, caractérisée en ce qu'un plateau tel que décrit précédemment est disposé en partie supérieure du caisson.

L'invention et ses avantages seront mieux compris à la lecture de la description qui va suivre, donnée uniquement à titre d'exemple et faite en se référant aux dessins annexés, sur lesquels :
- la figure 1 est une vue en perspective d'un meuble d'atelier comportant un plateau de pose selon l'invention,
- la figure 2 est une vue en perspective éclatée montrant le caisson du meuble de la figure 1,
- la figure 3 est une vue du détail III de la face supérieure du meuble de la figure 1 à échelle agrandie,
- la figure 4A est une vue en coupe du meuble de la figure 3 suivant la ligne IV-IV selon une première configuration,
- la figure 4B est une vue en coupe du meuble de la figure 3 suivant la ligne IV-IV selon une deuxième configuration,

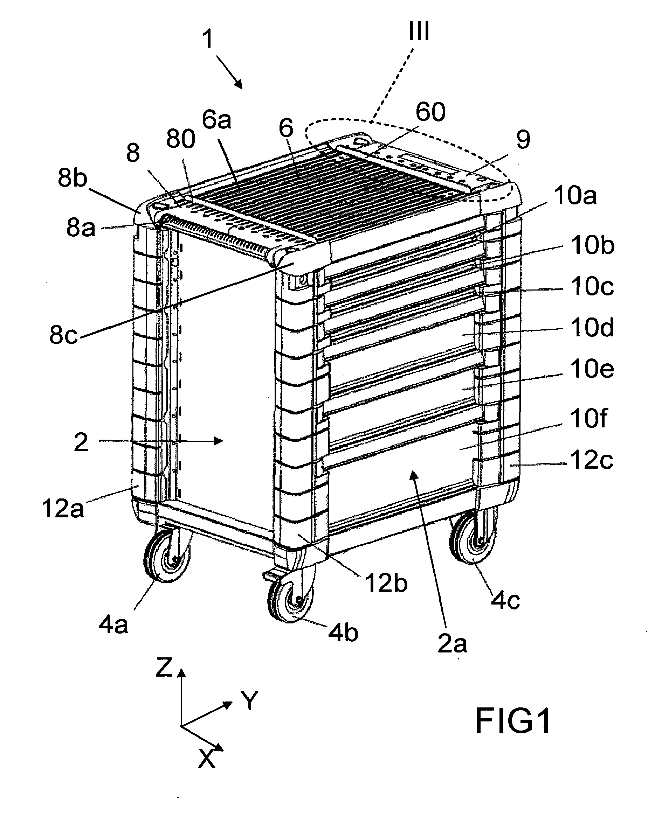

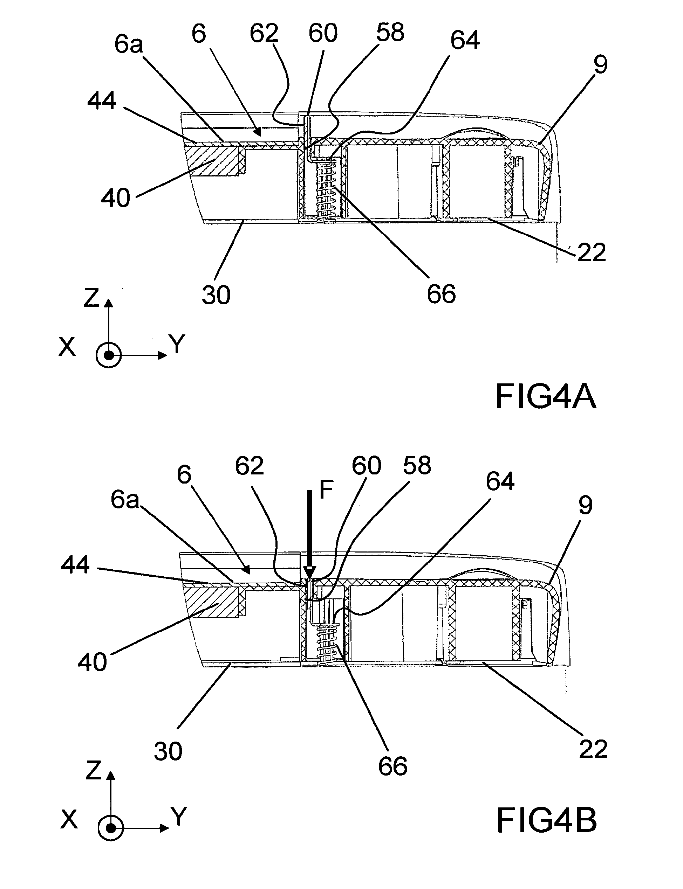

Sur les figures 1 à 4A et 4B, les dessins sont représentés suivant un repère orthogonal X, Y, Z habituel dans lequel l'axe X représente l'axe transversal, l'axe Y l'axe longitudinal et l'axe Z celui de la hauteur. Les références au positionnement s'entendent par rapport à ce repère. Les termes « avant » et « arrière », « inférieur » et « supérieur » s'entendent suivant l'orientation des figures 1 à 4B.

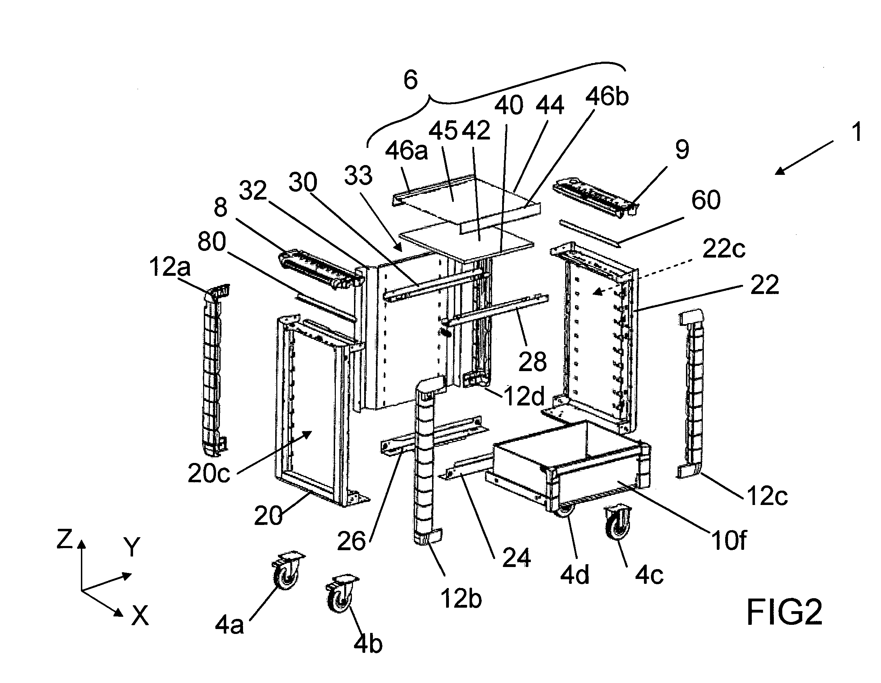

La figure 1 représente un mobilier 1 tel qu'une servante d'atelier, comprenant, de manière connue, un élément de mobilier 2 tel qu'un caisson de forme générale parallélépipédique et pourvu d'une face frontale 2a disposée sensiblement verticalement. Dans sa partie inférieure, le caisson 2 est équipé de moyens de déplacement tels que quatre roulettes 4a, 4b, 4c, 4d (figure 2) et, dans sa partie supérieure, il est équipé d'un plateau 6 de pose destiné à supporter divers objets plus ou moins volumineux.

Le plateau supérieur 6 est de forme sensiblement rectangulaire, la direction de la petite dimension s'étendant suivant l'axe X. Il présente une surface supérieure 6a destinée à la pose.d'un objet, la surface formant un plan général.

Le plateau 6 est disposé entre un premier embout 8 comportant une poignée 8a qui s'étend transversalement entre deux bras 8b et 8c et un deuxième embout 9 qui peut être identique au premier embout 8 ou qui peut être dépourvu de poignée.

Le caisson 2 comprend, en outre, une série de tiroirs 10a à 10f de hauteur différentes, disposés les uns au dessus des autres suivant l'axe Z, et destinés à recevoir, par exemple, des outils d'atelier. Les tiroirs sont montés mobiles en coulissement perpendiculaire par rapport à la face frontale 2a du caisson 2.

Quatre enjoliveurs 12a à 12d (figure 2), sont disposés chacun sur l'une des quatre arêtes verticales du caisson 2. Ces enjoliveurs permettent d'amortir des chocs légers, tout assurant une finition soignée du mobilier.

Sur la figure 2, le caisson 2 comprend deux joues latérales 20 et 22 métalliques distantes l'une de l'autre. Une traverse inférieure avant 24 et une traverse inférieure arrière 26 ainsi qu'une traverse supérieure avant 28 et une traverse supérieure arrière 30 relient les joues latérales 20 et 22. Les traverses inférieures 24 et 26 et supérieures 28 et 30 sont métalliques et s'étendent suivant l'axe longitudinal Y du mobilier 1.

Dans sa partie arrière, le caisson 2 comprend un panneau 32 métallique relié aux joues latérales 20 et 22.

Les joues latérales 20 et 22, et le panneau arrière 32 forment respectivement les faces latérales et arrière du parallélépipède, disposées sensiblement verticalement et présentant respectivement un espace creux 20c, 22c et 33 vers l'intérieur du caisson 2.

Les différents organes du caisson 2 sont assemblés entre eux par des systèmes de vis-écrou et/ou des rivets.

Sur la figure 2, le plateau 6 comprend un plan épais 40, de préférence en bois, dont la surface supérieure 42 est recouverte d'une plaque 44 métallique, de préférence profilée. Celle-ci comporte une section transversale comprenant une partie centrale 45 définissant un plan général de pose, limitée par deux bords longitudinaux 46a et 46b ayant un profil en saillie par rapport au plan général.

Les embouts 8 et 9 sont clippés et/ou vissés respectivement sur les joues latérales 20 et 22. Le plateau 6 est vissé au caisson 2.

L'agencement du caisson 2 est très avantageux en ce qu'il permet de décliner une gamme de mobilier dont la dimension longitudinale suivant l'axe Y peut être modifiée d'un modèle à l'autre. En effet, les organes du caisson 2 dont la dimension tend à varier sont les traverses 24, 26, 28, 30 et le panneau 32. Cet agencement limite le nombre de pièces métalliques à modifier d'un modèle à l'autre, ce qui a pour conséquence de réduire aussi la masse des modèles de grande dimension longitudinale.

L'aspect modulaire du caisson 2 requiert une adaptation relativement simple de la dimension longitudinale du plateau 6. Le plan 40 et la plaque profilée 44 sont découpés à la dimension longitudinale appropriée.

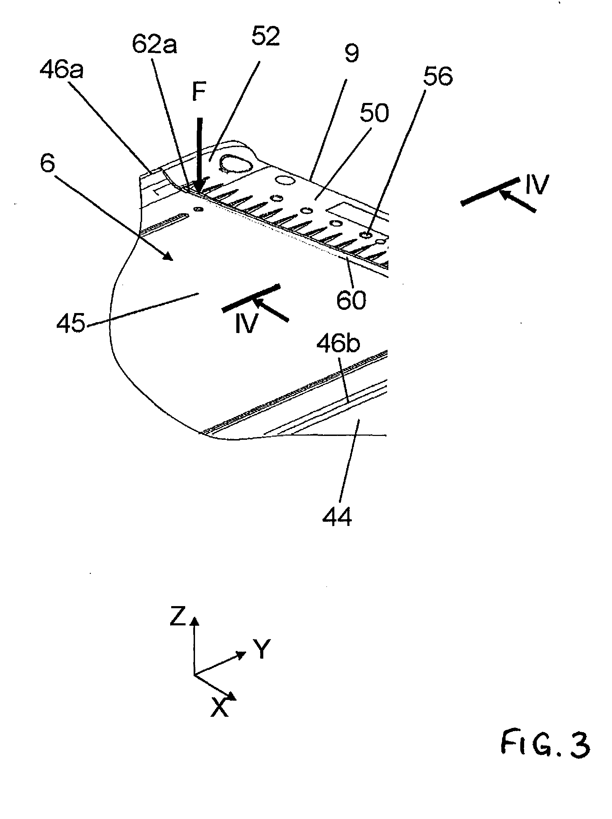

Sur la figure 3, l'embout 9 de la servante 1 est, de préférence, obtenu par moulage en matière plastique et ne comporte pas de poignée. L'embout 8 (figure 1) qui comporte une poignée venue de matière est également, de préférence, moulé en matière plastique.

L'embout 9 s'étendant suivant l'axe X et comprend une surface plane 50 centrale disposée sensiblement dans le plan de la partie centrale 45 de la plaque 44 profilée du plateau 6. Deux flancs inclinés 52 et 54 venus de matière avec la surface 50 limitent latéralement celle-ci. Les flancs 52 et 54 s'étendent longitudinalement sensiblement en alignement avec les bords profilés 46a et 46b de la plaque 44, et joignent les enjoliveurs 12 c et 12d.

La surface 50 de l'embout 9 présente au moins un évidement 56 destiné au rangement d'objets, en particulier une série d'évidements 56 aptes à recevoir, par exemple, chacun une lame d'outil.

Au joint du plateau 6 et l'embout 9, un premier guide 58 (figures 4A et 4B) s'étend parallèlement à l'axe transversal X et reçoit un rebord 60 en saillie par rapport au plan de la partie centrale 45 de la plaque 44, lorsqu'il est au repos.

Le rebord 60 s'étend entre les flancs inclinés 52 et 54 de l'embout 9, à faible distance de ceux-ci. Il est, de préférence, métallique, en particulier en tôle d'acier.

Dans un mode de réalisation préféré, l'embout 9 intègre à partir du moulage la fente transversale 58 de guidage dans laquelle est insérée le rebord 60.

Le rebord 60 est mobile, suivant une direction sensiblement perpendiculaire au plan général de la surface supérieure 6a de pose, entre une position de repos (figure 4A) dans laquelle il est disposé en saillie par rapport au plan général et une position de travail (Figure 4B) dans laquelle son extrémité libre est sensiblement en alignement par rapport audit plan général.

Le rebord 60 présente une section transversale ayant une forme en L (figures 4A et 4B) comportant une aile longue 62 et une aile courte 64 disposées respectivement sensiblement verticalement et horizontalement par rapport au plan général de pose.

L'aile longue 62 est délimitée par deux extrémités 62a et 62b arrondies.

L'aile courte 64 est sollicitée par au moins un organe de rappel 66 (figures 4A et 4B), en particulier un ressort de compression dont une extrémité est en butée fixe par rapport à la joue 22 du caisson 2 et l'autre extrémité est en appui mobile sur l'aile courte 64.

Sous l'action d'une charge F (figures 3 et 4B) posée sur la surface supérieure 6a du plateau 6 à l'aplomb du rebord 60, celui-ci s'escamote automatiquement depuis sa position de repos vers sa position de travail.

L'organe de rappel 66 agit à l'encontre de l'action de la charge F et tend à déplacer le rebord depuis sa position de travail vers sa position de repos lorsque l'action de la charge F est annulée.

Dans le mode de réalisation préféré, l'embout 8 comportant la poignée de manoeuvre 8a présente une fente (non représentée) similaire à la fente 58 de l'embout 9. Cette fente reçoit un rebord 80 (figure 1) de même nature que le rebord 60 et fonctionnant de la même manière.

Dans un mode de réalisation non représenté, deux ressorts de compression sollicitent chaque rebord, chacun des ressorts étant positionné à l'aplomb de chaque extrémité de l'aile longue du rebord correspondant. Ainsi, chaque extrémité du rebord est escamotable indépendamment de l'autre extrémité sous l'action d'une charge disposée de façon appropriée, comme représenté sur la figure 3.

La description divulgue un mobilier 1 ayant une structure porteuse 2 mobile telle qu'un caisson sur roulettes. Dans une variante non représentée, le mobilier comporte une structure porteuse et au moins un plateau de pose tel que décrit précédemment, de préférence plusieurs plateaux.

Dans une autre variante non représentée, le mobilier 1 peut être un meuble fixe tel qu'un élément bas de cuisine, disposant d'au moins un plateau de travail tel que décrit précédemment.

De manière générale, l'invention est applicable à tout type de plateau destiné à faire office de plan de travail.

Grâce à l'invention, les objets légers sont contraints dans un espace limité et ne peuvent tomber du plan de travail. Les objets lourds peuvent prendre appui sur un plan de travail dépourvu au moins partiellement de reliefs gênants.

De plus, le mode de fabrication du plateau selon l'invention permet un coût économique.

## Revendications

1. Plateau (6) d'élément de mobilier (2) comprenant une surface supérieure (6a) destinée à la pose d'un objet, la surface formant un plan général ; au moins un rebord (60, 80) mobile entre une position de repos dans laquelle le ou chaque rebord (60, 80) est disposé en saillie par rapport au plan général de la surface supérieure (6a) et une position de travail dans laquelle le ou chaque rebord (60, 80)est en alignement par rapport au plan général de la surface supérieure (6a),
**caractérisé en ce que**
le ou chaque rebord (60, 80) s'escamote automatiquement sous l'action d'une charge (F) sollicitant le ou chaque rebord (60, 80) depuis sa position de repos vers sa position de travail, la charge (F) étant posée sur la surface supérieure (6a) du plateau (6) à l'aplomb du ou de chaque rebord (60, 80).

2. Plateau selon la revendication 1, **caractérisé en ce que** le ou chaque rebord (60, 80) est mobile suivant une direction sensiblement perpendiculaire au plan général de la surface supérieure (6a).

3. Plateau selon la revendication 1 ou 2, **caractérisé en ce que** le ou chaque rebord (60, 80) est sollicité par au moins un organe de rappel (66) agissant à l'encontre de l'action de la charge (F) qui tend à déplacer le ou chaque rebord (60, 80) depuis sa position de repos vers sa position de travail, le ou chaque rebord (60, 80) reprenant sa position de repos en saillie du plan général lorsque l'action de la charge (F) est annulée.

4. Plateau selon l'une quelconque des revendications 1 à 3, **caractérisé en ce que** le ou chaque rebord (60, 80) comprend une forme en L comportant une aile longue (62) et une aile courte (64) disposées respectivement sensiblement verticalement et sensiblement horizontalement.

5. Plateau selon la revendication 4, **caractérisé en ce qu'**un guide (58) reçoit l'aile longue (62) du L du ou de chaque rebord (60, 80), et **en ce qu'**un ressort de compression (66) disposé entre une butée fixe du caisson (2) et l'aile courte (64) du L tend à déplacer le ou chaque rebord (60, 80) vers la position de repos.

6. Plateau selon l'une quelconque des revendications 1 à 5, **caractérisé en ce qu'**il présente une forme sensiblement rectangulaire, et comprend deux rebords (60, 80) escamotables disposés parallèlement entre eux suivant la direction du plateau (6) de petite dimension.

7. Plateau selon la revendication 6, **caractérisé en ce qu'**il comprend un plan (40), de préférence en bois, recouvert d'une plaque (44) métallique, de préférence profilée, et **en ce qu'**il est disposé, en outre, entre deux embouts (8, 9) fendus, chacun des deux rebords (60, 80) étant disposé dans la fente (58) de l'embout (8, 9) correspondant.

8. Plateau selon la revendication 7, **caractérisé en ce que** l'un au moins des embouts (8, 9) comprend au moins un évidement (56)destiné au rangement d'objet.

9. Mobilier (1) comprenant une structure porteuse (2) et au moins un plateau de pose (6), de préférence plusieurs plateaux, **caractérisé en ce que** le ou chaque plateau (6) est selon l'une quelconque des revendications 1 à 8.

10. Servante d'atelier (1) mobile comprenant un caisson (2) équipé d'au moins un tiroir (10a, 10b, 10c, 10d, 10e, 10f), et doté de moyens de déplacement (4a, 4b, 4c, 4d), en particulier des roulettes, **caractérisée en ce qu'**un plateau (6) selon l'une quelconque des revendications 1 à 8 est disposé dans la partie supérieure du caisson (2).

## Patentansprüche

1. Elementplatte (6) eines Mobiliars (2), umfassend eine Oberfläche (6a), die für das Abstellen eines Gegenstandes bestimmt ist, wobei die Fläche eine allgemeine Ebene bildet; mindestens einen Rand (60, 80), der zwischen einer Ruhestellung, in der der oder jeder Rand (60, 80) in Bezug zu der allgemeinen Ebene der Oberfläche (6a) überragend angeordnet ist, und einer Arbeitsstellung, in der der oder jeder Rand (60, 80) in Bezug zur allgemeinen Ebene der Oberfläche (6a) ausgerichtet ist, beweglich ist,
**dadurch gekennzeichnet, dass**
sich der oder jeder Rand (60, 80) automatisch unter der Wirkung einer Last (F), die den oder jeden Rand (60, 80) beansprucht, von seiner Ruhestellung in seine Arbeitsstellung zurückzieht, wobei die Last (F) auf der Oberfläche (6a) der Platte (6) senkrecht auf den oder jeden Rand (60, 80) abgestellt wird.

2. Platte nach Anspruch 1, **dadurch gekennzeichnet, dass** der oder jeder Rand (60, 80) in eine Richtung im Wesentlichen senkrecht auf die allgemeine Ebene der Oberfläche (6a) beweglich ist.

3. Platte nach Anspruch 1 oder 2, **dadurch gekennzeichnet, dass** der oder jeder Rand (60, 80) durch mindestens ein Rückstellelement (66) belastet wird, das gegen die Wirkung der Last (F) wirkt, die dazu neigt, den oder jeden Rand (60, 80) von seiner Ruhestellung in seine Arbeitsstellung zu verschieben, wobei der oder jeder Rand (60, 80) seine über die allgemeine Ebene überragende Ruhestellung wieder einnimmt, wenn die Wirkung der Last (F) aufgehoben ist.

4. Platte nach einem der Ansprüche 1 bis 3, **dadurch gekennzeichnet, dass** der oder jeder Rand (60, 80) eine L-Form umfasst, die einen langen Schenkel (62) und einen kurzen Schenkel (64) aufweist, die im Wesentlichen vertikal bzw. im Wesentlichen horizontal angeordnet sind.

5. Platte nach Anspruch 4, **dadurch gekennzeichnet, dass** eine Führung (58) den langen Schenkel (62) des L des oder jedes Randes (60, 80) aufnimmt, und dass eine Kompressionsfeder (66), die zwischen einem festen Anschlag des Kastens (2) und dem kurzen Schenkel (64) des L angeordnet ist, dazu neigt, den oder jeden Rand (60, 80) in die Ruhestellung zu verschieben.

6. Platte nach einem der Ansprüche 1 bis 5, **dadurch gekennzeichnet, dass** sie eine im Wesentlichen rechteckige Form aufweist und zwei einziehbare Ränder (60, 80) umfasst, die parallel zueinander entlang der Richtung der Platte (6) mit kleiner Abmessung angeordnet sind.

7. Platte nach Anspruch 6, **dadurch gekennzeichnet, dass** sie eine Ebene (40), vorzugsweise aus Holz, die mit einer Metallplatte (44), vorzugsweise mit Profil, bedeckt ist, und dass sie ferner zwischen zwei geschlitzten Ansätzen (8, 9) angeordnet ist, wobei jeder der beiden Ränder (60, 80) in dem Schlitz (58) des entsprechenden Ansatzes (8, 9) angeordnet ist.

8. Platte nach Anspruch 7, **dadurch gekennzeichnet, dass** mindestens einer der Ansätze (8, 9) mindestens eine Aussparung (56) umfasst, die zum Verstauen eines Gegenstandes bestimmt ist.

9. Mobiliar (1), umfassend eine Tragstruktur (2) und mindestens eine Stellplatte (6), vorzugsweise mehrere Platten, **dadurch gekennzeichnet, dass** die oder jede Platte (6) nach einem der Ansprüche 1 bis 8 ausgeführt ist.

10. Mobiler Werkstattwagen (1), umfassend einen Kasten (2), der mit mindestens einer Schublade (10a, 10b, 10c, 10d, 10e, 10f) ausgestattet und mit Verschiebemitteln (4a, 4b, 4c, 4d), insbesondere Rollen, versehen ist, **dadurch gekennzeichnet, dass** eine Platte (6) nach einem der Ansprüche 1 bis 8 in dem oberen Teil des Kastens (2) angeordnet ist.

## Claims

1. Tray (6) of a furniture element (2), comprising an upper surface (6a) intended for the placing of an object, the surface forming a general plane, at least one rim (60, 80) movable between a rest position in which the or each rim (60, 80) is arranged so that it projects relative to the general plane of the upper surface (6a) and a working position in which the or each rim (60, 80) is aligned relative to the general plane of the upper surface (6a), **characterised in that** the or each rim (60, 80) retracts automatically under the action of a load (F) which biases the or each rim (60, 80) from its rest position towards its working position, the load (F) being placed on the upper surface (6a) of the tray (6) directly above the or each rim (60, 80).

2. Tray according to claim 1, **characterised in that** the or each rim (60, 80) is movable in a direction substantially perpendicular to the general plane of the upper surface (6a).

3. Tray according to either claim 1 or claim 2, **characterised in that** the or each rim (60, 80) is biased by at least one restoring element (66) acting against the action of the load (F) which tends to move the or each rim (60, 80) from its rest position towards its working position, the or each rim (60, 80) resuming its rest position projecting from the general plane when the action of the load (F) is cancelled.

4. Tray according to any of claims 1 to 3, **characterised in that** the or each rim (60, 80) has an L shape having a long side (62) and a short side (64) respectively arranged substantially vertically and substantially horizontally.

5. Tray according to claim 4, **characterised in that** a guide (58) receives the long side (62) of the L of the or each rim (60, 80), and **in that** a compression spring (66) arranged between a fixed abutment of the box (2) and the short side (64) of the L tends to move the or each rim (60, 80) towards the rest position.

6. Tray according to any of claims 1 to 5, **characterised in that** it has a substantially rectangular shape and comprises two retractable rims (60, 80) arranged parallel to one another in the direction of the tray (6) of small dimension.

7. Tray according to claim 6, **characterised in that** it comprises a surface (40), preferably made of wood, covered with a metal sheet (44), preferably profiled, and **in that** moreover said surface is arranged between two slotted end pieces (8, 9), each of the two rims (60, 80) being arranged in the slot (58) of the corresponding end piece (8, 9).

8. Tray according to claim 7, **characterised in that** at least one of the end pieces (8, 9) comprises at least one recess (56) intended for the storage of objects.

9. Item of furniture (1) comprising a load-bearing structure (2) and at least one placement tray (6), preferably a plurality of trays, **characterised in that** the or each tray (6) is according to any of claims 1 to 8.

10. Movable workshop trolley (1) comprising a box (2) equipped with at least one drawer (10a, 10b, 10c, 10d, 10e, 10f) and provided with movement means (4a, 4b, 4c, 4d), in particular castors, **characterised in that** a tray (6) according to any of claims 1 to 8 is arranged in the upper part of the box (2).
